# EUROPÄISCHE PATENTSCHRIFT

(11) **EP 0 777 283 B1**
(45) Veröffentlichungstag und Bekanntmachung des Hinweises auf die Patenterteilung: **24.05.2000**
(21) Anmeldenummer: 96118728.3
(22) Anmeldetag: 22.11.1996
(51) Int. Cl.: H01M 2/12, H01M 2/04, H01M 2/08

(54) **Überflutungsschutz für einen Bleiakkumulator**
Overflow protection for a lead accumulator
Protection contre le noyage pour accumulateur au plomb

(30) Priorität: 28.11.1995 DE 19544198
(43) Veröffentlichungstag der Anmeldung: 04.06.1997
(73) Patentinhaber: ACCUMULATORENFABRIK SONNENSCHEIN GMBH, D-63654 Büdingen (DE)
(72) Erfinder: Kramm, Friedrich, 63654 Büdingen (DE); Münch, Erich, 60439 Frankfurt (DE)
(74) Vertreter: Weber, Dieter, Dr.

(56) Entgegenhaltungen:
- EP-A- 0 496 539
- DE-A- 2 036 158
- DE-A- 2 950 435
- DE-U- 8 812 468
- DE-U- 9 015 535
- GB-A- 581 118
- GB-A- 791 139
- GB-A- 1 548 129

## Beschreibung

Die Erfindung betrifft einen Überflutungsschutz für einen Bleiakkumulator, insbesondere für einen verschlossenen Bleiakkumulator, nach dem Oberbegriff des Patentanspruchs 1.

Es ist bekannt, Überdeckel für Bleiakkumulatoren so auszubilden, daß für säurehaltige Aerosole, die insbesondere beim Laden von Bleiakkumulatoren mit flüssigem Elektrolyten durch die entstehenden Gase auftreten können, möglichst lange Diffusionsstrecken bis zum Austritt aus der Entlüftungsöffnung entstehen (s.a. DE 83 19 778, EP 0 630 062). Die Aerosole schlagen sich weitgehend im Bereich dieser auch als "Labyrinth" bekannten Bereiche nieder. Die so niedergeschlagenen Aerosole laufen dann als Flüssigkeit wieder über geeignete, im Deckel untergebrachte Vorrichtungen in die einzelnen Batteriezellen zurück. Diese Deckelkonstruktionen sind üblicherweise mit einem Ableitrohr für die entweichenden Gase versehen.

Bei verschlossenen Bleiakkumulatoren ist normalerweise kein Überdeckel der bekannten Art erforderlich, da hier nur dann Gase und Aerosole austreten, wenn der in den einzelnen Batteriezellen vorhandene Gasdruck einen zulässigen Höchstwert überschreitet und die Sicherheitsventile geöffnet werden. Bei bestimmungsgemäßem Gebrauch werden die entstehenden Gase durch die bei dieser Bauart bekannte Rekombination abgebaut, so daß der Gasdruck normalerweise niedriger ist als der zulässige Höchstwert.

Im Außeneinsatz von verschlossenen Bleiakkumulatoren, beispielsweise im Unterflurbereich für die Stromversorgung von Telekommunikationseinrichtungen, ist es möglich, daß Wasser in diese Anlagen eindringen kann. Ein Kontakt stromführender Teile des Akkumulators mit dem eindringenden Wasser ist hierbei unbedingt zu vermeiden. Es soll aber eine Überwachung des Akkumulators, beispielsweise durch Messung der Batteriespannung an den Endpolen, möglich sein, ohne daß eine Gefährdung von Personen bzw. das Auftreten von Kriechströmen durch einen möglicherweise vorhandenen Feuchtigkeitsfilm eintreten. Schutz vor Feuchtigkeit ist demnach aus Gründen des Personenschutzes und auch aus technischen Gründen geboten, da diese zu erhöhter Selbstentladung des Akkumulators und zur Korrosion der Kontakte führen kann. Ferner führt ein Eindringen des Wassers zu einer Verschmutzung der Sicherheitsventile des Akkumulators. Dies kann Undichtigkeiten der Ventile und somit letztlich einen Ausfall des Akkumulators, verursachen. Es ist weiter bekannt, daß die eingangs erwähnten Konstruktionen ein Eindringen von Wasser und somit einen Kontakt mit stromführenden Teilen nicht zuverlässig verhindern können, insbesondere wenn es sich um erhebliche Wassermengen handelt.

Der Erfindung liegt daher das Problem zugrunde, einen Überdeckel, insbesondere für verschlossene Bleiakkumulatoren, gemäß dem Oberbegriff des Anspruchs 1 so auszugestalten, daß eine Spannungsprüfung zur Überwachung des Akkumulators und ein sicherer Betrieb auch bei Überflutung mit Wasser gewährleistet ist, ohne daß die Gefahr des Kontaktes von stromführenden Teilen des Akkumulators, insbesondere der Batteriepole, mit eindringendem Wasser gegeben ist, und daß eine Verschmutzung der Sicherheitsventile vermieden wird. Gleichzeitig soll aber ein eventuell auftretender Gasaustritt ungehindert möglich sein.

Diese Aufgabe wird erfindungsgemäß mit dem Merkmalen des Anspruchs 1 gelöst.

Durch Kapillarkräfte verursachtes Eindringen von Wasser in den kanalartigen Raum über den Sicherheitsventilen kann durch einen ausreichenden Innendurchmesser von mindestens 4 mm vermieden werden. Dieser Wert ist ebenfalls ausreichend, um das Zurücksteigen der Flüssigkeit in den kanalartigen Raum durch Druckausgleich nach einem Austritt von Gasblasen zu verhindern. Bei großen Batterien ist es vorteilhaft, eine ballonartige Ausformung des Steigrohres als Ausgleich für ein relativ großes Volumen des kanalartigen Raumes vorzusehen. Ebenso vorteilhaft ist der Einbau einer Fritte aus Kunststoff oder Glas als Zündschutz in das Winkelrohr gegen ein Zurückschlagen von brennenden Gasen in das Innere des Überdeckels. Eine zusätzliche vorteilhafte Weiterbildung der Erfindung ist die Auffüllung der durch die Ausnehmung gebildeten Polwannen zunächst mit Vergußmasse bis auf eine Höhe von ca. 2mm unterhalb der Oberkante des jeweiligen Endpols, gefolgt von einer abschließenden Ausfüllung des verbleibenden Raumes mit elastischer Silikonmasse als selbstdichtendem Material. Des weiteren ist es eine vorteilhafte Ausgestaltung, wenn als Werkstoff des Überdeckels thermoplastische Kunststoffe verwendet werden, da sie sich leicht auf den unteren Deckel des Bleiakkumulators durch Schweißen oder Kleben dicht aufbringen lassen. In der Regel werden dafür Kunststoffe, wie Polypropylen (PP) hoher Dichte, Acrylnitril - Butadien - Styrol-Copolymere (ABS) oder Styrol - Acrylnitril-Copolymere (SAN) verwendet.

Ein Ausführungsbeispiel der Erfindung ist in den Zeichnungen dargestellt und wird im Folgenden näher beschrieben.

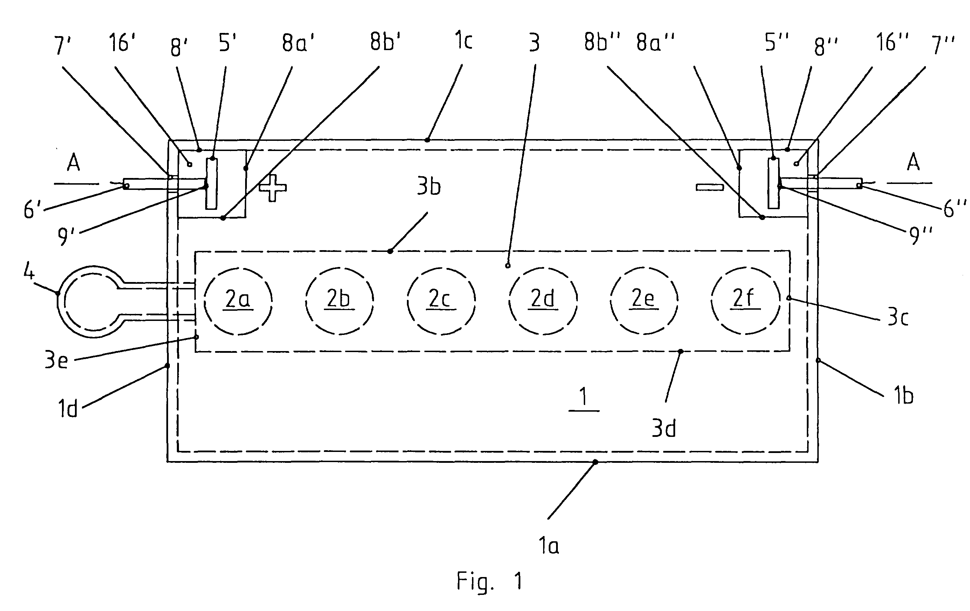

Fig. 1 stellt eine Draufsicht des erfindungsgemäßen Überflutungschutzes nach der Montage auf einem verschlossenen Bleiakkumulators dar.

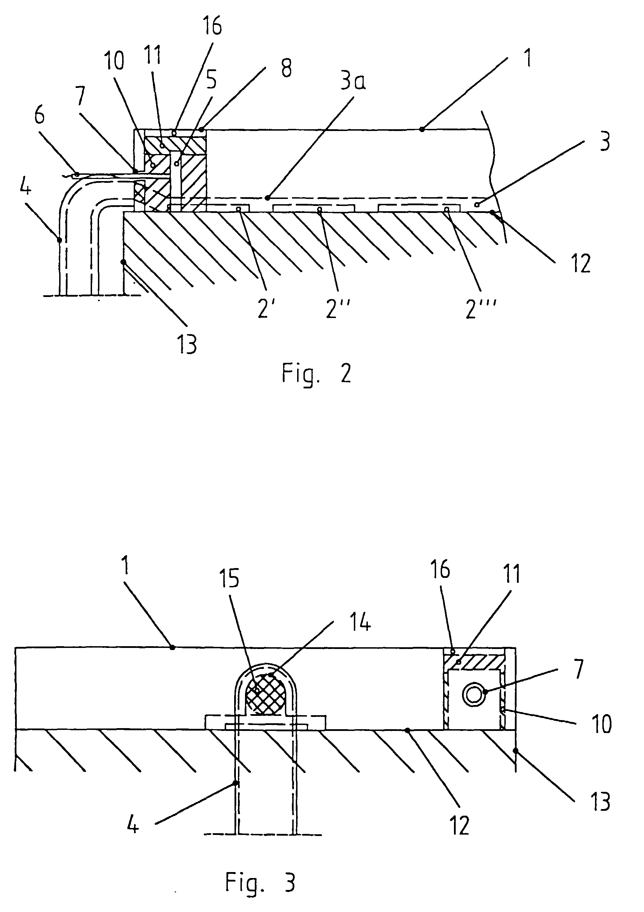

Fig. 2 stellt einen Schnitt A - A des in Fig. 1 dargestellten Überflutungsschutzes dar.

Fig. 3 stellt eine Seitenansicht des in Fig. 1 wiedergegebenen Überflutungsschutzes mit dem seitlich herabgeführten Steigrohr dar.

Der Überflutungsschutz besteht aus einem Überdeckel 1 mit den Seitenwänden 1a - 1d mit den Ausnehmungen 8 bzw. 8' und 8" für die Batteriepole 5 bzw. 5' und 5''. Er wird so auf den Batteriekasten 13 mit dem unteren Deckel 12 aufgesetzt und verbunden, daß sich über den Ventilen 2a - 2f bzw. 2' - 2"' ein Raum 3 ergibt, der durch die deckenartige Wand 3a und die Seitenwände 3b - 3e begrenzt wird. Gleichzeitig sind Ausnehmungen 8 bzw. 8' und 8" über den Batteriepolen 5 bzw. 5' und 5" angeordnet. Die Verbindung der Deckel geschieht mit den bekannten Verfahren des Spiegelschweißens oder Klebens. Die vordere Begrenzung 3e des kanalartigen Raumes 3 ist mit dem kreisförmigen Durchbruch 15 versehen. Im Durchbruch 15 kann eine Fritte 14 als Zündsperre über den gesamten Querschnitt des kreisförmigen Durchbruchs eingelassen sein. Das Winkelrohr 4 ist dicht von außen auf den Durchbruch 15 aufgebracht und in vorteilhafter Weise einstückig als Steigrohr senkrecht an der Batteriewand herabgeführt.

Die Ausnehmungen 8 bzw. 8' und 8" sind durch die Seitenwände 8a', 8a", 8b' und 8b" nach innen begrenzt. Die Seitenwände lc, 1b und 1d bilden jeweils die weiteren Begrenzungen nach außen. Die Höhe der Seitenwände 8a', 8a", 8b' und 8b" entspricht der inneren lichten Höhe des Überflutungsschutzes, so daß eine Wanne 16 bzw. 16' und 16" für die Endpole 5 bzw. 5' und 5" gebildet wird. Die Seitenwände 1b und 1d haben in Höhe der Endpolwanne 16 bzw. 16' und 16" unterhalb der Oberkante des Endpoles 5 bzw. 5' und 5" einen Durchbruch 7 bzw. 7' und 7" für die Zuführung und Verlötung 9 bzw. 9' und 9" eines Anschlußkabels 6 bzw. 6' und 6" an dem Endpol 5 bzw. 5' und 5".

Die Abdichtung der Lötstelle 9 bzw. 9' und 9" und des Anschlußkabels 6 bzw. 6' und 6" erfolgt durch Auffüllen der Endpolwanne 16 bzw. 16' und 16" bis ca. 2mm unterhalb der Oberkante des Endpols 5 bzw. 5' und 5" mit Vergußmasse 10. Die restliche Höhe der Endpolwanne 16 bzw. 16' und 16" wird mit hochelastischer Siliconmasse 11 aufgefüllt. Nach Durchführung einer Spannungsprüfung mit einer nadelförmigen Prüfsonde schließt sich die Silikonmasse selbständig und isoliert den Endpol von der äußeren Umgebung.

Ein Anwendungsbeispiel für den Fall einer Überflutung mit 5m Wassersäule ergibt unter der Annahme, daß das Volumen des kanalartigen Raumes bei normalem Luftdruck gleich dem inneren Volumen des Steigrohres ist und daß die Umgebungstemperatur gleichzeitig von 50°C auf 0°C absinkt, ein reduziertes Gesamtvolumen, das 6% größer ist als das Volumen des kanalartigen Raumes, so daß die Sicherheitsventile nicht mit Wasser in Kontakt kommen können.

## Patentansprüche

1. Bleiakkumulator, insbesondere verschlossener Bleiakkumulator, mit einem die Zellen abschließenden gemeinsamen unteren Deckel und einem gemeinsamen Überdeckel, der sich über die gesamte Fläche des unteren Deckels erstreckt und gemeinsam mit dem unteren Deckel einen Raum begrenzt, **dadurch gekennzeichnet**, daß ein sich über die Sicherheitsventile erstreckender kanalartiger Raum gebildet wird, dessen Volumen maximal so groß wie das Innenvolumen des mit dem kanalartigen Raum über ein Winkelrohr verbundenen und senkrecht an der Batteriewand herabgeführten Steigrohres ist, wobei der Innendurchmesser des Steigrohres ausreichend groß bemessen sein muß, um das Aufsteigen bzw. Zurücksteigen von Flüssigkeit durch Kapillarkräfte zu verhindern, und daß im Bereich der Batteriepole über jedem Batteriepol einzeln eine Ausnehmung im Überdeckel angeordnet ist und die durch die jeweilige Ausnehmung gebildete Polwanne mit dem jeweiligen Batteriepol und seinen mit ihm verbundenen Anschlußstücken der Anschlußkabel in der Weise mit selbstdichtendem Material ausgefüllt werden, daß sie vollkommen bedeckt sind.

2. Bleiakkumulator nach Anspruch 1, **dadurch gekennzeichnet**, daß der Innendurchmesser des Steigrohres mindestens 4 mm beträgt.

3. Bleiakkumulator nach Anspruch 1 oder 2 **dadurch gekennzeichnet**, daß der sich über die Sicherheitsventile erstreckende kanalartige Raum in ein Winkelrohr einmündet.

4. Bleiakkumulator nach einem der Ansprüche 1 bis 3, **dadurch gekennzeichnet**, daß im Innern des Winkelrohres über seinen gesamten lichten Querschnitt eine Fritte aus Kunststoff oder Glas eingelassen ist

5. Bleiakkumulator nach einem der Ansprüche 1 bis 4, **dadurch gekennzeichnet**, daß das Steigrohr eine ballonförmige Ausformung bildet.

6. Bleiakkumulator nach einem der Ansprüche 1 bis 5, **dadurch gekennzeichnet**, daß das selbstdichtende Material eine hochelastische Silikonmasse ist.

7. Bleiakkumulator nach einem der Ansprüche 1 bis 6, **dadurch gekennzeichnet**, daß der Überdeckel aus thermoplastischem Kunststoff, wie Polypropylen (PP) hoher Dichte, Acrylnitril - Butadien - Styrol-Copolymere (ABS) oder Styrol - Acrylnitril-Copolymere (SAN) besteht.

8. Bleiakkumulator nach einem der Ansprüche 1 bis 7, **dadurch gekennzeichnet**, daß der Überdeckel hermetisch dicht auf dem unteren Deckel angebracht ist.

## Claims

1. A lead accumulator, in particular a sealed lead accumulator, comprising a common lower cover which closes off the cells and a common top cover which extends over the entire area of the lower cover and which jointly with the lower cover defines a space, characterised in that there is formed a channel-like space which extends over the safety valves and the volume of which is at a maximum as large as the internal volume of the riser tube which is connected to the channel-like space by way of an angle tube and which is taken down perpendicularly on the battery wall, wherein the inside diameter of the riser tube must be sufficiently large to prevent liquid from rising up or rising back due to capillary forces, and that arranged in the region of the battery terminals over each battery terminal individually is an opening in the top cover and the terminal trough formed by the respective opening with the respective battery terminal and its connecting cable connecting portions connected thereto are filled with self-sealing material in such a way that they are completely covered.

2. A lead accumulator according to claim 1 characterised in that the inside diameter of the riser tube is at least 4 mm.

3. A lead accumulator according to claim 1 or claim 2 characterised in that the channel-like space which extends over the safety valves communicates with an angle tube.

4. A lead accumulator according to one of claims 1 to 3 characterised in that a frit of plastic material or glass is fitted in the interior of the angle tube over the entire internal cross-section thereof.

5. A lead accumulator according to one of claims 1 to 4 characterised. in that the riser tube forms a balloon-shaped configuration.

6. A lead accumulator according to one of claims 1 to 5 characterised in that the self-sealing material is a highly elastic silicone material.

7. A lead accumulator according to one of claims 1 to 6 characterised in that the top cover comprises thermoplastic material such as high-density polypropylene (PP), acrylonitrile-butadiene-styrene copolymers (ABS) or styrene-acrylonitrile-copolymers (SAN).

8. A lead accumulator according to one of claims 1 to 7 characterised in that the top cover is hermetically sealingly fitted on the lower cover.

## Revendications

1. Accumulateur au plomb, notamment accumulateur au plomb fermé, comprenant un couvercle inférieur commun, obturant les éléments, et un couvercle de recouvrement commun, qui s'étend par dessus la surface entière du couvercle inférieur et délimite une chambre en commun avec le couvercle inférieur, caractérisé en ce qu'est formée une chambre en forme de canal s'étendant au-dessus des soupapes de sécurité et dont le volume est au maximum aussi grand que le volume intérieur du tube de décharge relié à la chambre en forme de canal, par l'intermédiaire d'un tube coudé, et descendant verticalement le long de la paroi de batterie, le diamètre intérieur du tube de décharge devant être dimensionné de manière à être suffisamment grand pour empêcher la remontée ou le retour de liquide sous l'effet de forces de capillarité, et en ce que dans la zone des cosses de batterie, par dessus chaque cosse de batterie, est disposé individuellement un évidement prévu dans le couvercle de recouvrement et les cuvettes pour cosse formées chacune par l'évidement respectif, avec la cosse de batterie respective et ses pièces de connexion des câbles de raccordement, qui lui sont reliées, sont remplies de matériau auto-étanchéifiant, d'une manière telle qu'elles soient complètement couvertes.

2. Accumulateur au plomb selon la revendication 1, caractérisé en ce que le diamètre intérieur du tube de décharge est d'au moins 4 mm.

3. Accumulateur au plomb selon la revendication 1 ou 2, caractérisé en ce que la chambre en forme de canal, s'étendant au-dessus des soupapes de sécurité, débouche dans un tube coudé.

4. Accumulateur au plomb selon l'une des revendications 1 à 3, caractérisé en ce qu'à l'intérieur du tube coudé est enchâssée sur toute la section transversale libre de ce dernier, une fritte de matière plastique ou de verre.

5. Accumulateur au plomb selon l'une des revendications 1 à 4, caractérisé en ce que le tube de décharge forme une excroissance en forme de ballon.

6. Accumulateur au plomb selon l'une des revendications 1 à 5, caractérisé en ce que le matériau auto-étanchéifiant est une pâte aux silicones à élasticité élevée.

7. Accumulateur au plomb selon l'une des revendications 1 à 6, caractérisé en ce que le couvercle de recouvrement est réalisé en une matière plastique thermoplastique, telle que du polypropylène (PP) de densité élevée, des copolymères acrylnitrile-styrène-butadiène (ABS), ou des copolymères styrène-acrylo-nitrile (SAN).

8. Accumulateur au plomb selon l'une des revendications 1 à 7, caractérisé en ce que le couvercle de recouvrement est rapporté de manière hermétiquement étanche sur le couvercle inférieur.
